# EUROPEAN PATENT APPLICATION

(11) **EP 4 184 632 A1**
(43) Date of publication of application: **24.05.2023**
(21) Application number: 21872945.7
(22) Date of filing: 24.09.2021
(51) Int. Cl.: H01M 10/04, H01M 50/528, H01M 50/153, H01M 50/109

(54) **BUTTON-TYPE SECONDARY BATTERY AND ASSEMBLY DEVICE THEREOF**

(30) Priority: 24.09.2020 KR 20200124295; 17.09.2021 KR 20210125278
(71) Applicant: LG Energy Solution, Ltd., Seoul 07335 (KR)
(72) Inventor: SHIM, Kyu Hun, Daejeon 34122 (KR); SIM, Hyung Sub, Daejeon 34122 (KR); LEE, Jun Oh, Daejeon 34122 (KR); LEE, Seung Tae, Daejeon 34122 (KR)
(74) Representative: Hoffmann Eitle
(86) International application number: PCT/KR2021/013045
(87) International publication number: WO 2022/065917

(57) **Abstract**

The present invention provides a button-type secondary battery, in which an electrode assembly is mounted in a can having a closed lower side and an opened upper side, and when an electrode tab extending from the electrode assembly is provided in a state of being welded to an inner surface of a cap coupled to cover the upper side of the can, the can and the cap are assembled with each other, the button-type secondary battery comprising: a can holder configured to fix the can so that a top surface of the electrode assembly faces an upper side; a cap holder configured to grip the cap so that the cap rotates and ascends/descends; and a guide that is slidable toward the electrode tab so that an end of one side of the guide presses a predetermined point to form a bending point, at which bending of the electrode tab occurs when the electrode tab is bent, wherein, when the guide forms the bending point at the electrode tab, the cap holder allows the cap to be coupled to the can so that the opened upper side of the can is closed.

In the present invention having the above-described configuration, since the bending point is formed to induce the bending of the electrode tab before the cap and the can are coupled to each other, the cap and the can may be assembled in the state in which the electrode tab is uniformly bent.

## Description

### CROSS-REFERENCE TO RELATED APPLICATION

The present application claims the benefit of the priority of Korean Patent Application Nos. 10-2020-0124295, filed on September 24, 2020, and 10-2021-0125278, filed on September 17, 2021, which are hereby incorporated by reference in their entirety.

### TECHNICAL FIELD

The present invention relates to a button-type secondary battery and a device for assembling the same, and more particularly, to a device for assembling a button-type secondary battery in which, when a bending point that induces bending of an electrode tab (a positive electrode tab or a negative electrode tab) is formed at a predetermined position so that a cap and a can are coupled to each other, the electrode tab is bent as intended, and a button-type secondary battery manufactured through the assembling device.

### BACKGROUND ART

A button-type battery commonly used as a coin-type battery or a button-type battery has a thin button shape of which a diameter is greater than a height and is widely used in various devices such as remote controllers, clocks, toys, computer parts, and the like.

Such a button-type battery is mainly manufactured as a non-rechargeable primary battery, but is also widely manufactured as a secondary battery that is chargeable and dischargeable as miniaturized devices are developed. Also, the button-type secondary battery is manufactured to have a structure in which an electrode assembly and an electrolyte are embedded in a case to repeatedly perform charging and discharging, like the button-type secondary battery or the cylindrical or pouch-type secondary battery.

The button-type secondary battery has a structure in which a can having a lower side closed by a bottom surface and an opened upper side and a cap is coupled to a cap so that the opened upper side of the can is closed. The can has a schale shape, in which a sidewall protrudes to a predetermined height along a circumference of the bottom surface. For example, the can may have a schale shape having a diameter slightly greater than that of the can so that the cap is fitted into the can (in a manner in which the can and the cap are press-fitted) or a circular plate-shaped shape which covers a top surface of the can so that an edge portion thereof is fixed to an upper end of the can through welding (in a manner in which the can and the cap are coupled to each other through the welding). Here, even if the cap has the circular plate shape as well as the cap has the schale shape similar to the can, it is necessary to couple the cap to the can in the correct position so that the edge of the cap is fitted into the upper end of the can.

An electrode assembly, in which a positive electrode, a separator, a negative electrode are wound in a state of being stacked, and an electrode are mounted in the can. The electrode assembly has a structure that is wound in a state in which the separator, the negative electrode, the separator, and the positive electrode are stacked around a core, and when the core is removed, a central hole is formed in a center, and a center pin is selectively inserted into the central hole.

Thus, the electrode assembly has a structure, in which each of both surface thereof is formed in a circular shape, a negative electrode tab extending from the negative electrode protrudes from one surface, and a positive electrode tab extending from the positive electrode protrudes from the other surface. Here, when the electrode assembly is mounted in the can, in one surface and the other surface, one is a surface facing a lower side, and the other is a surface facing an upper side.

Thus, one of the two electrode tabs (the positive electrode tab and the negative electrode tab) is welded to an inner bottom surface of the can before the electrode assembly is mounted in the can, and the other of the two electrode tabs is welded to a ceiling surface (a surface facing the electrode assembly when the cap is coupled to the can) inside the cap after the electrode assembly is mounted in the can.

In addition, in a state in which a gasket having no electrical conductivity is disposed at a point at which the cap and the can are in contact with each other to prevent short circuit from occurring when the cap and the can are coupled to each other, a portion of the edge of the cap is coupled to the can in a state of being bent to press the gasket.

However, when the cap and the can are coupled to each other, a point at which the electrode tab (the positive electrode tab or the negative electrode tab) is bent is not constant. Thus, when the cap and the can are coupled to each other, there is a possibility that the electrode tab presses or hits the electrode assembly.

Also, if the electrode tab is bent at an incorrect point or in an unintended direction, an interference may occur when the cap is coupled.

### DISCLOSURE OF THE INVENTION

### TECHNICAL PROBLEM

Therefore, a main object of the prevent invention is to provide a device for assembling a button-type secondary battery in which, a point (bending point), at which an electrode tab is bent, is formed at a constant position so that the electrode tab is bent in an intended shape when a cap and a can are coupled to each other, thereby solving the above problem, and a button-type secondary battery that is assembled by the assembling device.

### TECHNICAL SOLUTION

A button-type secondary battery, in which an electrode assembly is mounted in a can having a closed lower side and an opened upper side, and when an electrode tab extending from the electrode assembly is provided in a state of being welded to an inner surface of a cap coupled to cover the upper side of the can, the can and the cap are assembled with each other, according to the present invention for achieving the above object comprises: a can holder configured to fix the can so that a top surface of the electrode assembly faces an upper side; a cap holder configured to grip the cap so that the cap rotates and ascends/descends; and a guide that is slidable toward the electrode tab so that an end of one side of the guide presses a predetermined point to form a bending point, at which bending of the electrode tab occurs when the electrode tab is bent, wherein, when the guide forms the bending point at the electrode tab, the cap holder allows the cap to be coupled to the can so that the opened upper side of the can is closed.

Before the guide approaches the electrode tab to form the bending point, the cap holder may allow the cap to rotate in a direction perpendicular to a sliding direction of the guide.

When the cap rotates in the direction perpendicular to the sliding direction of the guide, the can and the cap may be fixed to be perpendicular to each other.

A vacuum device configured to generate a negative pressure so that the gripping may be performed at a contact point with the cap by the negative pressure is coupled to the cap holder.

When the cap holder couples the cap to the can, the cap holder may allow the cap to rotate so that a lower edge of the cap is in contact with an upper edge of the can and allow the cap to descend so that a side surface of the can is inserted into a side surface of the cap.

The cap holder and the guide may be disposed to face each other with the can holder therebetween.

The cap holder may comprise: an upper coupling plate into which the cap is inserted to be fixed through the vacuum device; a first sliding part slid toward the can holder in a sliding direction that is the same as a direction in which the guide is slid; a second sliding part coupled to the first sliding part and slid to allow the cap to ascend or descend; and a rotation part having one end, to which the upper coupling plate is coupled, and the other end that is coupled to be rotatable on the second sliding part, wherein the first sliding part, the second sliding part, and the rotation part may be simultaneously or individually operable.

The can holder may comprise a lower coupling plate in which a groove is punched so that the can is inserted to be fixed.

The can holder may fix two or more cans, the cap holder may grip caps having the same number as the cans, and the guide may form the bending points at the electrodes welded to the cap holders at the same time through one sliding.

When the guide presses the electrode tab to form the bending point, the cap holder may fix the cap so that an opposite side of the pressed point is supported by an inner surface of the cap.

The guide may be controlled to vary in pressing force according to a thickness of the electrode tab.

Furthermore, a button-type secondary battery, in which, when an electrode assembly is mounted in a can having a closed lower side and an opened upper side, a cap is coupled to close the upper side of the can, according to the present invention comprises: an electrode tab having one end coupled to the electrode assembly and the other end bonded to an inner surface of the cap, wherein the electrode tab is bent between the electrode assembly and the cap, and a bending point C pressed by an external pressure to induce bending is formed at the electrode tab, wherein, the bending is performed at the bending point (C).

the bending point (C) is a point (a point at which rigidity decreases, ductility increases, or elastic deformation occurs) that is pressed by the external pressure so that the electrode tab is relatively thinner in thickness or deformed in material.

### ADVANTAGEOUS EFFECTS

In the present invention having the above-described configuration, since the bending point is formed to induce the bending of the electrode tab (one of negative electrode tan or the positive electrode tab, which is connected to the cap) before the cap and the can are coupled to each other, the cap and the can may be assembled in the state in which the electrode tab is uniformly bent.

In the electrode tab, the bending point may be formed at the point that is pressed by the guide. Here, the cup holder may be movable and rotatable to form the bending point at the accurate position so that the electrode tab, of which the end is welded to the cap, is disposed at the proper position when the guide approaches the bending point.

Since the cap holder grips the cap through the negative pressure, it does not cause the deformation or traces on the cap due to the grip.

In addition, since the can holder and the cap holder fix or grip the plurality of cans and caps, the plurality of cans and caps may be assembled at the same time.

Furthermore, since the guide is controlled to vary in pressure applied according to the thickness of the electrode tab, the bending point may be formed at the electrode tabs having various thicknesses and materials.

### BRIEF DESCRIPTION OF THE DRAWINGS

FIG. 1 is a view sequentially illustrating states in which a cap behaves while assembling is performed through a device for assembling a button-type secondary battery according to the present invention.
FIG. 2 is a perspective view of the device for assembling the button-type secondary battery according to an embodiment of the present invention.
FIG. 3 is a partial enlarged view illustrating a portion A of FIG. 2.
FIG. 4a is a view illustrating a state before a guide enters an electrode tab.
FIG. 4b is a view illustrating a state in which the guide enters the electrode tab.
FIG. 4c is a view illustrating a state in which the guide retreats to its original position.
FIG. 4d is a view illustrating a state in which a first sliding part approaches a can holder so that a second sliding part ascends, and a rotation part rotates.
FIG. 4e is a view illustrating a state before the second sliding part descends.
FIG. 4f is a view illustrating a state in which the second sliding part completely descends.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a device for assembling a button-type secondary battery, which couples a cap 4 to a can 3 after forming a bending point C on an electrode tab 2 when the cap 4 and the can 3 are coupled to each other. Hereinafter, an embodiment according to the present invention will be described in more detail with reference to the accompanying drawings.

### First embodiment

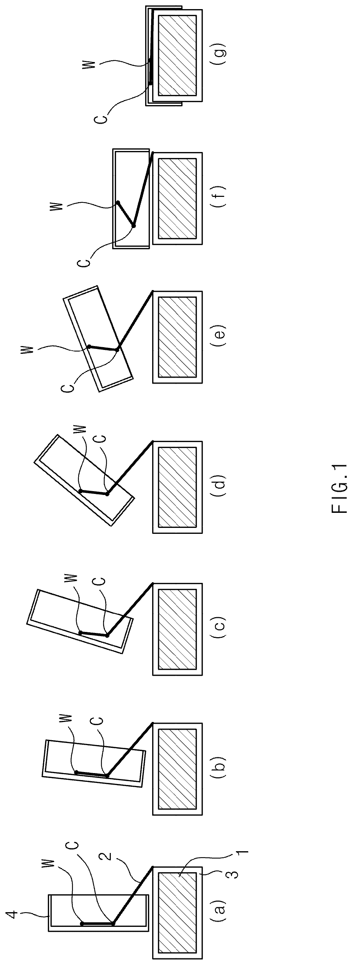

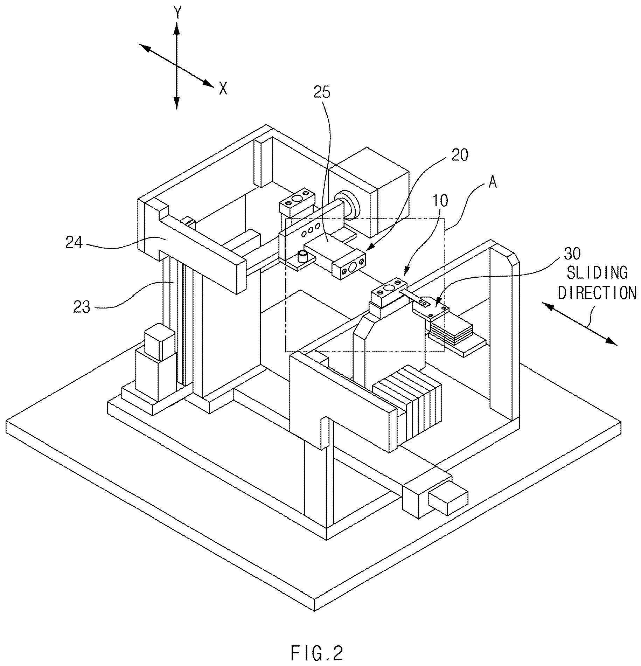

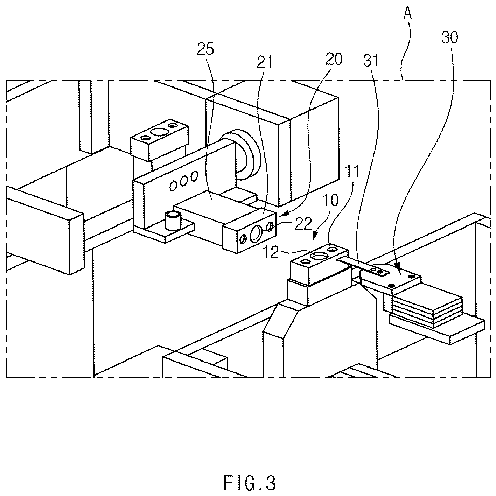

FIG. 1 is a view sequentially illustrating states in which a cap behaves while assembling is performed through a device for assembling a button-type secondary battery according to the present invention, FIG. 2 is a perspective view of the device for assembling the button-type secondary battery according to an embodiment of the present invention, and FIG. 3 is a partial enlarged view illustrating a portion A of FIG. 2.

Referring to the accompanying drawings, the device for assembling the button-type secondary battery provided in this embodiment comprises a can holder 10, a cap holder 20, and a guide 30.

Here, in the button-type secondary battery to be assembled by the assembling device provided in this embodiment, an electrode assembly 1 is mounted in the can 3 in a state in which a negative electrode tab extending from a bottom surface of the electrode assembly 1 is welded to the can 3, and a positive electrode tab 2 extending from a top surface of the electrode assembly 1 is welded at a predetermined point W on an inner surface of the can 4. The cap 4 and the can 3 are provided in a state <a> in FIG. 1 when seated on a cap holder 20 and a can holder 10, which will be described later. However, in this case, the electrode assembly may be seated in reverse. That is, the electrode assembly 1 is mounted in the can 3 in a state in which a positive electrode tab extending from the bottom surface of the electrode assembly 1 is welded to the can 3, and a negative electrode tab extending from the top surface of the electrode assembly 1 is welded at a predetermined point W on an inner surface of the cap 4.

The can holder 10 is configured to fix the can 3 so that the top surface of the electrode assembly 1 face an upper side. That is, as more clearly illustrated in FIG. 3, the can holder 10 comprises a lower coupling plate 11 in which a groove 12 having an inner diameter is punched so that the can 3 is inserted to be fixed, and a frame capable of fixing the lower coupling plate 11 at a predetermined height. Thus, the can holder 10 may fix movement of the can 3 while the cap 4 is coupled to the can 3 at a predetermined height.

The cap holder 20 is configured to grip the cap 4 so that the cap 4 rotates and ascends/descends.

That is, as illustrated in FIGS. 2 and 3, the cap holder 20 comprises an upper coupling plate 21, a first sliding part 23, a second sliding part 24, and a rotation part 25.

A groove 22 having an inner diameter so that the cap is inserted to be fixed is punched in the upper coupling plate 21. In addition, the upper coupling plate 21 may be connected to an external vacuum device (not shown) through a hose 26 to fix the cap 4.

That is, a point at which air is suctioned by the vacuum device may be formed in the groove 22 of the upper coupling plate 21, and thus, the cap 4 may be fixed by a negative pressure generated at the point. In FIG. 1, the cap 4 has a schale shape having a closed top surface and an opened bottom surface like the can 3. However, as described above, if the can 3 and the cap 4 are not press-fitted, but coupled to each other through welding, the cap 4 may have a circular plate shape. Even if the cap 4 is formed in the circular plate shape, the cap 4 may be fixed to the cap holder 20 by the negative pressure generated in the vacuum device.

Also, the upper coupling plate 21 is coupled to an end of one side of the rotation part 25. An end of the other side of the rotation part 25 may be rotatably coupled to the second sliding part 24. The rotation part 25 may rotate by a predetermined angle at a connection point of the second sliding part 24 by a motor or pneumatic or hydraulic pressure. Here, as illustrated in FIG. 1, a rotation direction means a rotation direction on an XY plane in FIG. 2 as a rotation direction in which the cap 4 is covered on the can 3.

The second sliding part 24 may allow the upper coupling part 21 and the rotation part 25 to ascend and descend. That is, the second sliding part 24 may be slid in a Y direction in FIG. 2. The second sliding part 24 may be also driven by the motor or pneumatic or hydraulic pressure.

The second sliding part 24 may be connected to the first sliding part 23 to be slid in an X direction in FIG. 2, which is the same direction as the sliding direction of a guide 30 to be slid. The first sliding part 23 may also be driven by the motor or pneumatic or hydraulic pressure.

In addition, the first sliding part 23, the second sliding part 24, and the rotation part 25 may be configured to be operable simultaneously or individually.

Furthermore, the guide 30 is disposed at an opposite side of the cap holder 20 with the can holder 10 in a center thereof. The guide 30 may have a structure in which a blade 32 made of a metal having hardness greater than that of the electrode tab 2 is coupled to an end of the sliding device that is slid in the X direction.

Thus, when the blade 31 presses a specific point of the electrode tab 2 in a state in which the electrode tab 2 is fixed, a bending point C may be formed at a point that is pressed by the blade 31.

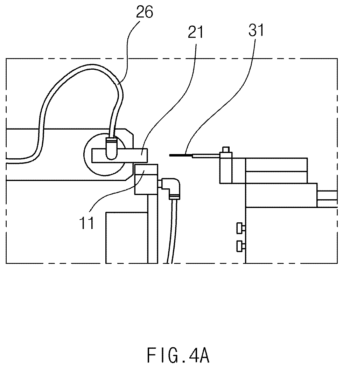

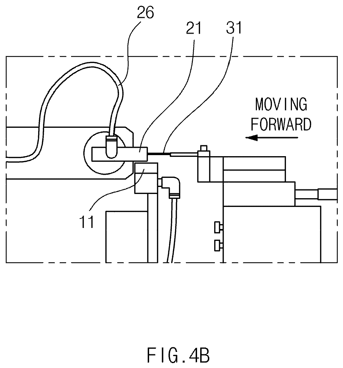

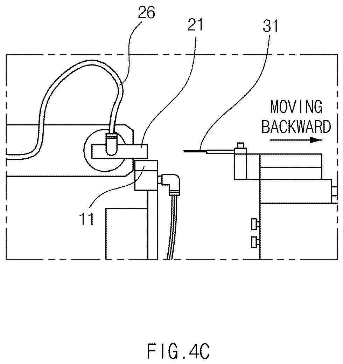

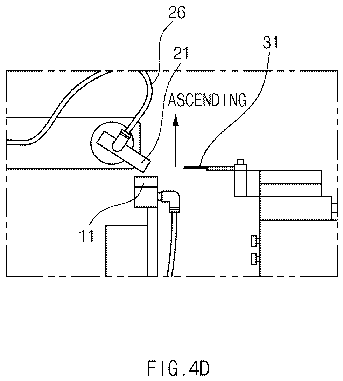

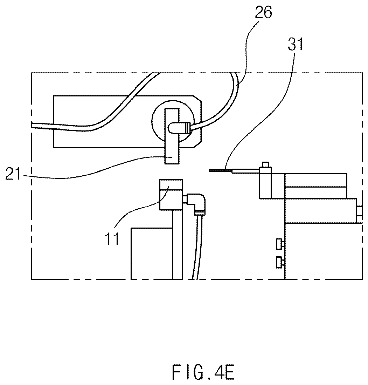

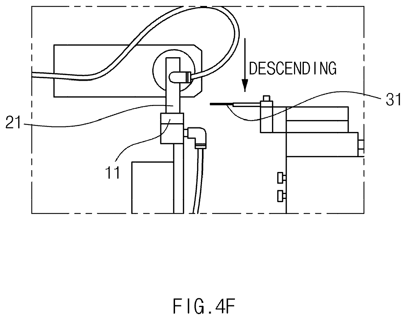

FIG. 4a is a view illustrating a state before a guide enters an electrode tab, FIG. 4b is a view illustrating a state in which the guide enters the electrode tab, FIG. 4c is a view illustrating a state in which the guide retreats to its original position, FIG. 4d is a view illustrating a state in which a first sliding part approaches a can holder so that a second sliding part ascends, and a rotation part rotates, FIG. 4e is a view illustrating a state before the second sliding part descends, and FIG. 4f is a view illustrating a state in which the second sliding part completely descends. However, in order to avoid complication of the drawings, in FIGS. 4a to 4f, a state in which the cap 4 and the can 3 are deleted is illustrated.

Referring to FIGS. 1 and 4A to 4F, a secondary battery is provided in a state in which the can 3 is seated on the lower coupling plate 11 of the can holder 10, and the cap 4 is gripped to the upper coupling plate 21 of the cap holder 20. Here, the electrode assembly 1 may be in a state of being stated in the can 3, and the electrode tab 2 extending from the electrode assembly 1 may be one of the positive electrode tab or the negative electrode tab and in a state of being welded to a specific point W on an inner ceiling surface of the cap 4. In addition, the other of the positive electrode tab or the negative electrode tab is in a state of being welded to an inner bottom surface of the can 3.

That is, as illustrated in FIG. 4a, the can holder 10 and the cap holder 20 are disposed as in a state <a> of FIG. 1.

Also, in the state of FIG. 4a, the sliding device of the guide 30 approaches the electrode tab 2 as illustrated in FIG. 4b. An end of the blade 31 coupled to the sliding device presses the electrode tab 2 so that the electrode tab 2 has a bending point C at a predetermined point. Here, the bending point C means a point which is pressed by the blade 31 to form a mark or notch so that the electrode tab 2 is relatively thinner in thickness or deformed in material to induce bending (mechanical strength or ductility is changed at a specific point).

After the bending point C is formed, the guide 30 returns to its original position as illustrated in FIG. 4c.

After the guide 30 returns, the cap holder 20 may lift and rotate the cap 4 so that the cap 4 moves upward. That is, as illustrated in FIG. 4d, the cap 4 may rotate and ascend from a state <b> to a state <e> of FIG. 1 and then be disposed above the can 3. That is, each of the first sliding part 23 and the second sliding part 24 is slid in the X and Y directions, and simultaneously, the rotation part 25 is rotated, and thus, the cap 4 is rotatable to be gradually coupled to the can 3. In more detail, when the first sliding part 23 moves in a direction approaching the can holder 10, and the second sliding part 24 ascends, and simultaneously, the rotation part 25 is rotated in a clockwise direction with respect to FIG. 1, the posture may be changed from a state <b> to a state <e> of FIG. 1.

When the cap holder 20 is in the same state as in FIG. 4e, the cap 4 has the same posture as in state <e> of FIG. 1. Here, when the cap 4 is rotated, the electrode tab 2 is bent at the bending point C.

Also, finally, when the second sliding part 24 descends as illustrated in FIG. 4f, the cap 4 descends like the rotation part 25 and the upper coupling plate 21, so that the cap 4 and the can 3 are completely coupled to each other as illustrated in a state <g> of FIG. 1. Here, when the cap 4 has the circular plate shape as described above, an edge of the cap 4 may be fitted into an upper end of the can 3 or move from the mounted state to the welding process.

Next, when the negative pressure is removed from the cap holder 20, and the cap 4 is separated, a button-type secondary battery in which the coupling of the cap 4 and the can 3 is completed, remains in the can holder 10. After the assembled button-type secondary battery is withdrawn, the next cap 4 and the next can 3, which will be assembled, are seated again in the cap holder 20 and the can holder 10.

### Second embodiment

Furthermore, in the present invention, a device for assembling a button-type secondary battery, in which a plurality of button-type secondary batteries are capable of being assembled at the same time as is provided as a second embodiment.

In this embodiment, the can holder 10 may fix two or more cans 3, and the cap holder 20 may grip the caps 4 having the same number as the cans 3. Thus, the guide 30 may be configured to form the bending point C at each of electrode tabs 2, which are griped to the cap holders 20 through single sliding.

That is, in the structure of this embodiment, the can holder 10 comprises a lower coupling plate 11 having a plurality of grooves 12, each of which has an inner diameter so that the can 3 is inserted and fixed, and the upper coupling plate 21 may have grooves 22 having the same number as the grooves 12 formed in the lower coupling plate 11. Here, each of the grooves 22 formed in the upper coupling plate 21 may be connected to the vacuum device to apply the negative pressure, thereby individually gripping each of the caps 4.

Also, the guide 30 may also be configured to form the plurality of bending points C at the same time by disposing the plurality of blades 31 at the end of the sliding device.

Therefore, after seating and gripping the cans 3 and caps 4 of the individual button-type secondary batteries in the grooves 12 formed in the lower coupling plate 11 and the grooves 22 formed in the upper coupling plate 21, respectively, as described above, when the operation of the guide 30 and the cap holder 20 are performed at the same time, the plurality of button-type secondary batteries may be assembled at the same time by one operation.

When the guide 30 presses the electrode tab 2 to form the bending point C, the guide 30, the guide 30 may be controlled to vary in pressing force according to a thickness of the electrode tab 2 so that the bending point C is also formed at the electrode tabs 2 having various thicknesses and materials.

### Third embodiment

The present invention provides a button-type secondary battery, which is capable of being manufactured with the assembling device according to the first embodiment or the second embodiment, as a third embodiment.

Referring to FIG. 1, a button-type secondary battery provided in this embodiment comprises a can 3 having a closed lower side and an opened upper side, an electrode assembly 1 mounted in the can 3, and a cap 4 coupled to close the upper side of the can 3 when the electrode assembly 1 is mounted in the can 3. Also, inner ceiling surfaces of the electrode assembly 1 and the cap 4 are connected to an electrode tab 2. That is, one end of the electrode tab 2 is connected to the electrode assembly 1, and the other end of the electrode tab 2 is connected to the cap 4. Here, the electrode tab 2 may be either a negative electrode tab extending from a negative electrode or a positive electrode tab extending from a positive electrode, which are provided in the electrode assembly 1.

The electrode tab 2 is bent between the electrode assembly 1 and the cap 4, and a bending point C pressed by an external pressure (i.e., is physically pressed to an end of the guide as described in the previous embodiment) to induce bending is formed at the electrode tab 2. Here, the bending is performed at the bending point C.

The bending point C is a point, which is pressed by the external pressure so that the electrode tab 2 is relatively thinner in thickness or deformed in material (a point at which rigidity decreases, ductility increases, or elastic deformation occurs). Thus, when a behavior of the cap 4 occurs, and thus, bending force is applied to the electrode tab 2, the bending of the electrode tab 2 occurs at the bending point C at which supporting force is relatively weaker than at other points.

Thus, in a state in which the electrode tab 2 is bent at the bending point C, the cap 4 is coupled to the can 3.

In the present invention having the above-described configuration, since the bending point C at which the bending of the electrode tab 2 is induced before the cap 4 and the can 3 are coupled to each other, the cap 4 and the can 3 may be assembled in a state in which the electrode tab 2 is uniformly bent.

The electrode tab 2 may have the bending point C at a point that is pressed by pressing of a guide 30, and a cap holder 20 may be movable and rotatable so that the electrode tab 2, of which an end is welded to the cap 4, is disposed at a proper position when the guide 30 approaches the cap holder 20.

Since the cap holder 20 grips the cap 4 through the negative pressure, the deformation or traces due to the grip may not occur in the cap 4.

In addition, since a can holder 10 and the cap holder 20 are capable of fixing or gripping a plurality of cans 3 and cap 4, a plurality of secondary batteries may be assembled at the same time.

Furthermore, since the guide 30 is controlled to vary in pressing force according to a thickness of the electrode tab 2, the bending point C may be formed at the electrode tabs 2 having various thicknesses and materials.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Can holder
11: Lower coupling plate
20: Cap holder
21: Upper coupling plate
30: Guide

## Claims

1. A button-type secondary battery, in which an electrode assembly is mounted in a can having a closed lower side and an opened upper side, and when an electrode tab extending from the electrode assembly is provided in a state of being welded to an inner surface of a cap coupled to cover the upper side of the can, the can and the cap are assembled with each other, the button-type secondary battery comprising:
a can holder configured to fix the can so that a top surface of the electrode assembly faces an upper side;
a cap holder configured to grip the cap so that the cap rotates and ascends/descends; and
a guide that is slidable toward the electrode tab so that an end of one side of the guide presses a predetermined point to form a bending point, at which bending of the electrode tab occurs when the electrode tab is bent,
wherein, when the guide forms the bending point at the electrode tab, the cap holder allows the cap to be coupled to the can so that the opened upper side of the can is closed.

2. The button-type secondary battery of claim 1, wherein, before the guide approaches the electrode tab to form the bending point, the cap holder allows the cap to rotate in a direction perpendicular to a sliding direction of the guide.

3. The button-type secondary battery of claim 2, wherein, when the cap rotates in the direction perpendicular to the sliding direction of the guide, the can and the cap are fixed to be perpendicular to each other.

4. The button-type secondary battery of claim 1, wherein a vacuum device configured to generate a negative pressure so that the gripping is performed at a contact point with the cap by the negative pressure is coupled to the cap holder.

5. The button-type secondary battery of claim 2, wherein, when the cap holder couples the cap to the can, the cap holder allows the cap to rotate so that a lower edge of the cap is in contact with an upper edge of the can and allows the cap to descend so that a side surface of the can is inserted into a side surface of the cap.

6. The button-type secondary battery of claim 4, wherein the cap holder and the guide are disposed to face each other with the can holder therebetween.

7. The button-type secondary battery of claim 6, wherein the cap holder comprises:
an upper coupling plate into which the cap is inserted to be fixed through the vacuum device;
a first sliding part slid toward the can holder in a sliding direction that is the same as a direction in which the guide is slid;
a second sliding part coupled to the first sliding part and slid to allow the cap to ascend or descend; and
a rotation part having one end, to which the upper coupling plate is coupled, and the other end that is coupled to be rotatable on the second sliding part,
wherein the first sliding part, the second sliding part, and the rotation part are simultaneously or individually operable.

8. The button-type secondary battery of claim 6, wherein the can holder comprises a lower coupling plate in which a groove is punched so that the can is inserted to be fixed.

9. The button-type secondary battery of claim 1, wherein the can holder fixes two or more cans,
the cap holder grips caps having the same number as the cans, and
the guide forms the bending points at the electrodes welded to the cap holders at the same time through one sliding.

10. The button-type secondary battery of claim 1, wherein, when the guide presses the electrode tab to form the bending point, the cap holder fixes the cap so that an opposite side of the pressed point is supported by an inner surface of the cap.

11. The button-type secondary battery of any one of claims 1 to 10, wherein the guide is controlled to vary in pressing force according to a thickness of the electrode tab.

12. A button-type secondary battery, in which, when an electrode assembly is mounted in a can having a closed lower side and an opened upper side, a cap is coupled to close the upper side of the can, the button-type secondary battery comprising:
an electrode tab having one end coupled to the electrode assembly and the other end bonded to an inner surface of the cap,
wherein the electrode tab is bent between the electrode assembly and the cap, and a bending point C pressed by an external pressure to induce bending is formed at the electrode tab, wherein, the bending is performed at the bending point (C).

13. The button-type secondary battery of claim 12, wherein the bending point (C) is a point that is pressed by the external pressure so that the electrode tab is relatively thinner in thickness or deformed in material.
